# EUROPÄISCHE PATENTANMELDUNG

(11) **EP 1 777 431 A2**
(43) Veröffentlichungstag der Anmeldung: **25.04.2007**
(21) Anmeldenummer: 06019628.4
(22) Anmeldetag: 20.09.2006
(51) Int. Cl.: F16D 48/06

(54) **Kraftfahrzeug**

(30) Priorität: 19.10.2005 DE 102005050043
(71) Anmelder: AUDI AG, 85045 Ingolstadt (DE)
(72) Erfinder: Holzmann, Manfred, 91171 Greding (DE); Held, Ralf, 85072 Eichstätt (DE)
(74) Vertreter: Thielmann, Frank

(57) **Zusammenfassung**

Kraftfahrzeug umfassend ein manuell zu schaltendes Getriebe mit einer über ein Kupplungspedal vom Fahrer zu betätigenden Kupplung, wobei ein in einem reversibel aktivierbaren Betriebsmodus betätigbares Stellmittel (9) zum automatischen Öffnen und Schließen der Kupplung (8) ohne Pedalbetätigung vorgesehen ist.

## Beschreibung

Die Erfindung betrifft ein Kraftfahrzeug umfassend ein manuell zu schaltendes Getriebe mit einer über ein Kupplungspedal vom Fahrer zu betätigenden Kupplung.

Bei einem solchen Kraftfahrzeug mit einem manuell zu schaltenden Getriebe besteht insbesondere bei Stadtfahrten oder in Stausituationen, wenn also ein Stop-and-go-Betrieb gegeben ist, das Problem, dass der Fahrer kontinuierlich die Kupplung betätigen muss, um anzufahren bzw. wenn er wieder in den Stand bremst. Dies wird von vielen Fahrern als störend und äußerst aufwändig empfunden, nachdem damit nicht zuletzt auch eine körperliche Belastung verbunden ist. Dies führt mitunter dazu, dass sich Käufer, die eigentlich ein Kraftfahrzeug mit einem manuell zu schaltenden Getriebe bevorzugen würden, für ein Kraftfahrzeug mit einem Automatikgetriebe entscheiden, da bei diesen bekanntlich die Kupplung automatisch betätigt wird und die eingangs genannten Schwierigkeiten, die sich bei einem Stop-and-go-Betrieb ergeben, dort gerade nicht vorkommen.

Weiterhin sind Fahrerassistenzsysteme bekannt, die eine automatische Längsregelung des Fahrzeugs übernehmen, das heißt, diese Systeme greifen aktiv in den Brems- und Beschleunigungsbetrieb des Fahrzeugs in Abhängigkeit der Verkehrslage ein, indem sie über Sensoren vor dem Fahrzeug befindliche Objekte detektieren. Solche Systeme sind beispielsweise als ACC-Systeme (ACC = Adaptive Cruise Control) bekannt. Diese Systeme sind in der Lage, das Fahrzeug automatisch bis in den Stand zu bremsen. Zwangsläufig ist eine Integration solcher Systeme nur bei Kraftfahrzeugen mit automatisch geschaltetem Getriebe sinnvoll, da bei diesen die Kupplung automatisch geöffnet wird. Der Fahrer hat hier nur noch die Aufgabe, das Fahrzeug zu lenken. Eine Integration eines solchen Assistenzsystems, das das Fahrzeug bis in den Stand herunterbremst, in ein Fahrzeug mit Handschaltung würde stets bedingen, dass der Fahrer selbst aktiv mitarbeitet, indem er beim Herunterbremsen die Kupplung betätigt, um das Getriebe zu entkuppeln, was jedoch den eigentlichen Sicherheits- und Komfortnutzen des Fahrerassistenzsystems konterkariert.

Der Erfindung liegt damit das Problem zugrunde, ein Kraftfahrzeug anzugeben, das den Fahrer insbesondere in Situationen mit Stop-and-go-Betrieb entlastet, und das grundsätzlich die Integration eines Fahrerassistenzsystems der oben beschriebenen Art ermöglicht, ohne dass der Fahrer hierbei aktiv werden muss.

Zur Lösung dieses Problems ist bei einem Kraftfahrzeug der eingangs genannten Art erfindungsgemäß vorgesehen, dass ein in einem reversibel aktivierbaren Betriebsmodus betätigbares Stellmittel zum automatischen Öffnen und Schließen der Kupplung ohne Pedalbetätigung vorgesehen ist.

Beim erfindungsgemäßen Kraftfahrzeug ist neben dem eigentlichen Kupplungspedal, das vom Fahrer zum Öffnen und Schließen der Kupplung zu betätigen ist, ein automatisch gesteuertes Stellmittel zum Öffnen und Schließen der Kupplung vorgesehen, das die Kupplung automatisch ohne eine vom Fahrer erforderlichen Pedalaktion öffnet und schließt, wenn dies die Betriebs- oder Fahrsituation erfordert. Das Stellmittel selbst ist nur in bestimmten Situationen aktiviert bzw. aktivierbar, das heißt, es ist nicht die ganze Zeit aktiviert und könnte folglich die Kupplung öffnen und schließen, sondern nur, wenn verschiedene Randbedingungen erfüllt sind, so dass der generelle Betriebsmodus für diesen "Automatikbetrieb" überhaupt aktiviert ist. Der Fahrer wird also hinsichtlich der Kupplungsbetätigung nicht vollständig entlastet, vielmehr steht grundsätzlich der manuelle Schaltbetrieb mit der Pedalbetätigung im Vordergrund, während der "Automatikmodus" mit dem elektronisch angesteuerten Stellmittel zum Öffnen und Schließen der Kupplung nur in bestimmten Situationen aktiv ist, wobei er reversibel aktivierbar ist, wenn eben die die entsprechende Aktivierungssituation bestimmenden Randbedingungen erfüllt sind.

Dies ermöglicht es ohne weiteres, beispielsweise bei Staufahrten oder im Stadtverkehr, wenn also ein Stop-and-go-Betrieb gegeben ist, den Fahrer von der Pedalbetätigung zu entlasten, indem die Kupplung automatisch über das Stellmittel im dann aktivierten Betriebsmodus geöffnet und geschlossen wird. Der Fahrer muss lediglich anfahren, also Gas geben und bremsen, die Kupplungsbetätigung erfolgt automatisch, wobei das Stellmittel, beispielsweise ein Stellmotor, über eine geeignete Steuerungseinrichtung in Abhängigkeit beispielsweise der Motordrehzahl angesteuert wird. Befindet sich das Fahrzeug beispielsweise im Stand und betätigt der Fahrer das Gaspedal, so erhöht sich zwangsläufig die Motordrehzahl, was als Triggersignal für das Stellmittel dient, das dann mit der entsprechenden Geschwindigkeit die Kupplung schließt, so dass das Fahrzeug anfahren kann. Entsprechendes gilt im Bremsfall, wenn die Motordrehzahl deutlich sinkt, so dass das Stellmittel beispielsweise ab Erreichen einer bestimmten Grenzdrehzahl die Kupplung öffnet und der Fahrer lediglich noch in den Stand bremsen muss.

Ersichtlich lässt das derart ausgestaltete Kraftfahrzeug auch die Integration eines Fahrerassistenzsystems (ACC-System) zu, das das Fahrzeug automatisch bis in den Stand bremst. Denn auch hier erfolgt das Öffnen der Kupplung im dann aktivierten Betriebsmodus automatisch ohne Fahreraktion, wenn eine bestimmte Grenzdrehzahl unterschritten ist, so dass das Fahrzeug bis in den Stand bremsen kann.

In jedem Fall wird bei dem beschriebenen Stop-and-go-Betrieb bzw. dem automatischen Bremsen in den Stand ein Abwürgen des Motors infolge der automatischen Öffnung der Kupplung sicher verhindert.

Nachdem die automatische Kupplungsbetätigung den Fahrer nur in den oben beschriebenen Situationen, wo eben eine häufige Kupplungstätigkeit erforderlich wäre, entlasten soll, ist beim erfindungsgemäßen Kraftfahrzeug der Betriebsmodus nur unterhalb einer Grenzgeschwindigkeit aktivierbar, das heißt, das Stellelement ist nur unterhalb einer bestimmten Grenzgeschwindigkeit überhaupt ansteuerbar. Diese Grenzgeschwindigkeit kann beispielsweise 15 km/h, 20 km/h oder 25 km/h betragen. Bei einer Geschwindigkeit größer dieser Grenzgeschwindigkeit ist eine Betätigung der Kupplung nur über das Kupplungspedal möglich, das heißt, der Fahrer findet seinen gewohnten Handschalter-Betrieb vor. Erst unterhalb dieser Grenzgeschwindigkeit ist der "Automatikbetrieb" grundsätzlich aktivierbar, da nur dann die eingangs geschilderten Probleme überhaupt auftreten können. Eine Ansteuerung des Stellelements ist also nur unterhalb dieser Grenzgeschwindigkeit überhaupt möglich.

Eine zweckmäßige Weiterbildung der Erfindung sieht vor, die Aktivierbarkeit des Betriebsmodus nur im ersten Gang, gegebenenfalls auch im zweiten Gang und/oder dem Rückwärtsgang vorzusehen. Dies deshalb, da die Hauptanwendung des erfindungsgemäß integrierten automatischen Stellmittels bei Stop-and-go-Betriebssituationen liegt, in denen im ersten Gang, allenfalls noch im zweiten Gang gefahren wird. Grundsätzlich denkbar ist aber auch eine Anwendung dann, wenn der Rückwärtsgang eingelegt ist, um auch hier den Fahrer von der Kupplungsbetätigung zu entlasten. Die Information über den tatsächlich eingelegten Gang kann der das Stellmittel bei Vorliegen der den Betriebsmodus aktivierenden bzw. die Tätigkeit des Stellmittels auslösenden Randbedingungen oder Parametern steuernden Steuerungseinrichtung entweder unmittelbar von einem Getriebe- oder Gangsensor gegeben werden, auch kann die Information am Schalthebel abgegriffen werden. Denkbar ist es aber auch, diese Information aus dem Verhältnis Raddrehzahl : Motordrehzahl, das stets einem bestimmten Gang bzw. einer bestimmten Gangübersetzung entspricht, zu bestimmen, wobei dies entweder im Stellmittel-Steuergerät selbst erfolgen kann, wozu ihm die entsprechenden benötigten Informationen von entsprechenden Sensoren oder anderen Steuergeräten gegeben werden, oder dieses Verhältnis wird anderswo ermittelt und entsprechend an das Stellmittel-Steuergerät übertragen.

Wie bereits ausgeführt, öffnet und schließt das Stellelement die Kupplung in Abhängigkeit der Ist-Drehzahl des Motors und gegebenenfalls einer Information über den eingelegten Gang. Steht das Fahrzeug und hält das Stellelement im "Automatikmodus" die Kupplung offen, so wird das Stellelement über die Steuerungseinrichtung zum Schließen der Kupplung angesteuert, wenn eine Erhöhung der Motordrehzahl, also der Ist-Drehzahl, vom Motorsteuergerät an das Stellmittel-Steuergerät gegeben wird, aus der ableitbar ist, dass der Fahrer anfahren möchte. Dies könnte aber auch aus der z.B. sensorisch erfassten Fahrpedalstellung abgeleitet werden, oder im Falle eines verwendeten Fahrerassistenzsystems wie dem ACC-System aus der Momentenanforderung des Systems bestimmt werden. Entsprechend wird im Falle eines Bremsens vorgegangen. Auch hier wird die Motordrehzahl vom Motorsteuergerät an das Stellmittel-Steuergerät gegeben, das bei Erreichen einer Grenzgeschwindigkeit das Stellmittel zum Öffnen der Kupplung ansteuert, so dass der Fahrer noch weiter herunterbremsen kann, ohne den Motor dabei abzuwürgen oder selbst aktiv zu werden.

Zweckmäßig ist ein Wählmittel zum Anwählen und Ein- und Ausschalten des reversibel aktivierbaren Betriebsmodus vorgesehen. Über dieses Wählmittel wird der "Automatikmodus" oder "Stop-and-go-Modus" grundsätzlich ein- oder ausgeschalten, das heißt, das System muss eingeschaltet sein, damit der reversibel aktivierbare Betriebsmodus überhaupt bei Vorliegen der entsprechenden Randbedingungen aktiviert oder deaktiviert werden kann. Die reversible Aktivierung oder Deaktivierung erfolgt dann wie ausgeführt in Abhängigkeit der Ist-Geschwindigkeit sowie des tatsächlich eingelegten Gangs.

Das Wählmittel selbst kann eine Taste oder ein Schalter sein, der vom Fahrer also aktiv zu betätigen ist, wenn er grundsätzlich während einer Fahrt diesen assistierenden "Stop-and-go-Modus" zugeschaltet haben möchte. Alternativ kann das Wählmittel auch eine ein Display umfassende optische Benutzerschnittstelle mit einer Anwahleinrichtung zum Wählen einer am Display dargestellten Information sein. Der Fahrer wählt also an dem Display, an dem entsprechende Auswahlmöglichkeiten gegeben sind, den "Stop-and-go-Modus" an und schaltet diesen ein, so dass das System grundsätzlich betriebsbereit ist.

Zweckmäßig ist es ferner, wenn ein Anzeigemittel zum Anzeigen des Aktivierungszustands des Betriebsmodus vorgesehen ist. Dieses Anzeigemittel kann zum einen anzeigen, dass der "Stop-and-go-Modus" grundsätzlich eingeschalten ist, wie hierüber auch angezeigt werden kann, ob nun der Betriebsmodus zur automatischen Kupplung und Entkupplung aktiviert ist, wenn also beispielsweise die Grenzgeschwindigkeit unterschritten und der entsprechende Gang eingelegt ist, oder wenn der Betriebsmodus deaktiviert ist. Dieses Anzeigemittel kann optisch arbeiten, beispielsweise über entsprechende LED's oder Anzeigen in einem Display, bevorzugt armaturenbrettseitig, so dass es vom Fahrer sofort wahrgenommen wird. Es kann aber auch akustisch arbeiten, beispielsweise über eine Ansage oder über ein entsprechendes Tonsignal. In jedem Fall ist es zweckmäßig, wenn der Fahrer eine Information dahingehend erhält, dass der Betriebsmodus aktiv ist und er also bei einem weiteren Herunterbremsen oder einem erneuten Anfahren etc. die Kupplung nicht betätigen muss. Auf der anderen Seite wird ihm hierüber aber natürlich auch signalisiert, wenn der Betriebsmodus wieder deaktiviert und er gezwungen ist, aktiv zu kuppeln.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipskizze eines erfindungsgemäßen Kraftfahrzeugs, und
- Fig. 2: eine Prinzipdarstellung der für den automatischen Kupplungsbetrieb erforderlichen relevanten Elemente des Kraftfahrzeug aus Fig. 1.

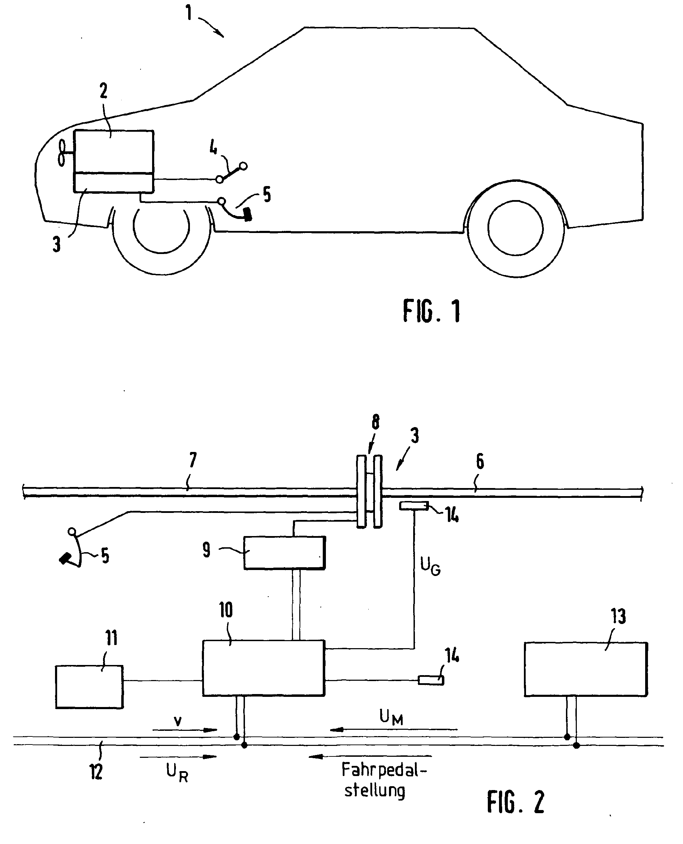

Fig. 1 zeigt ein erfindungsgemäßes Kraftfahrzeug 1, umfassend einen Motor 2 nebst Getriebe 3, das über einen Schalthebel 4 vom Fahrer manuell zu schalten ist, wozu das Getriebe entkoppelt werden muss. Hierfür dient bekanntlich ein Kupplungspedal 5, das vom Fahrer zum Öffnen oder Schließen der Kupplung aktiv zu bewegen ist.

In Fig. 2 ist in Form einer Prinzipdarstellung die Systemtopologie gezeigt, die zum Realisieren der erfindungsgemäßen zusätzlichen automatischen Funktion zum Öffnen und Schließen der Kupplung dient. Gezeigt ist das Getriebe 3, das eine Getriebeeingangswelle 6 und eine Kurbelwelle 7 aufweist, die über eine Kupplung 8 miteinander reversibel kuppel- und entkuppelbar sind. Hierzu dient wie beschrieben zum einen das Kupplungspedal 5, das vom Fahrer aktiv zu betätigen ist. Wird es getreten, so wird die Kupplung 8 bekanntlich geöffnet, wird es wiederum entlastet, so schließt die Kupplung.

Erfindungsgemäß vorgesehen ist nun weiterhin ein Stellmittel 9, beispielsweise ein Stellmotor, der bevorzugt direkt im Getriebe angeordnet ist und unmittelbar auf die Kupplung 8 wirkt. Das Stellmittel 9 kommuniziert mit einem Steuergerät 10, das nach Bedarf das Stellmittel 9 ansteuert, um über dieses automatisch und ohne jede Fahrertätigkeit die Kupplung 8 zu öffnen oder zu schlie-ßen. Das Steuergerät 10 kann dabei im Getriebe integriert sein, denkbar ist auch, diese Funktion in einem anderen, von Haus aus vorgesehenen Steuergerät zu integrieren.

Gezeigt ist ferner ein Wählmittel 11 nach Art eines Hauptbetriebsschalters, über das generell das System zum automatischen Betätigen der Kupplung 8 ein- oder ausgeschaltet werden kann. Ein automatischer Kupplungsbetrieb ist nur dann möglich, wenn dieses Wählmittel 11 betätigt wurde und der entsprechende "Automatikbetrieb" oder "Stop-and-go-Modus" angewählt und eingeschalten wurde. Jedoch ist dieses Wählmittel optional, es ist nicht zwingend vorzusehen. Vielmehr kann die Konfiguration auch so sein, dass dieses System grundsätzlich zugeschaltet ist. Für den Fahrer spielt dies keine Rolle, nachdem er, wenn er möchte, in jedem Fall, also auch beim Anfahren oder beim Bremsen in den Stand, stets aktiv die Kupplung beziehungsweise das Pedal noch betätigen kann. Beide Systeme sind grundsätzlich unabhängig voneinander.

Generell kann das Steuergerät 10 das Stellmittel 9 nur dann ansteuern, das heißt, generell ist eine automatische Kupplungsbetätigung nur dann möglich, wenn entsprechende Randbedingungen erfüllt sind, die die temporäre Aktivierung dieses Betriebsmodus zulassen.

Dieser Betriebsmodus ist nur dann aktiviert, wenn die Ist-Geschwindigkeit ≤ eine vorgegebene Grenzgeschwindigkeit ist. Als Grenzgeschwindigkeit können beispielsweise werksseitig 20 km/h eingestellt werden. Über den Fahrzeugbus 12, üblicherweise ein CAN-Bus, erhält das Steuergerät 10 eine Geschwindigkeitsinformation v. Zeigt diese Geschwindigkeitsinformation v an, dass die Ist-Geschwindigkeit ≤ der vorgegebenen Grenzgeschwindigkeit ist, ist der automatische Kupplungsbetriebsmodus grundsätzlich aktivierbar. Zur Aktivierung ist jedoch weiterhin als zweite Randbedingung erforderlich, dass ein bestimmter Gang eingelegt ist, vorzugsweise der erste Gang, das heißt, die grundsätzliche Aktivierbarkeit dieses Betriebsmodus ist nur dann gegeben, wenn der erste Gang eingelegt ist. Hierzu wird im gezeigten Beispiel über den Fahrzeugbus 12 von einem Motorsteuergerät 13 die Motordrehzahl UM an das Steuergerät 10 gegeben. Über einen.weiteren Drehzahlsensor 14, der hier die Drehzahl der Getriebeeingangswelle 6 (U_{G}) abgreift, wird eine Drehzahlinformation U_{G} an das Steuergerät 10 gegeben. Ferner wird dem Steuergerät 10 das Signal U_{R}, das die Raddrehzahl angibt, über den Bus 12 gegeben. Aus den beiden Informationen U_{M} und U_{R} kann nun seitens des Steuergeräts 10 das Übersetzungsverhältnis bzw. der tatsächlich eingelegte Gang ermittelt werden, sofern die Kupplung geschlossen ist. In Verbindung mit dem Signal U_{G} des Sensors 14 kann auch bei geöffneter Kupplung aus dem Verhältnis U_{G} : U_{R} die eingelegte Gangstufe ermittelt werden. Da bei geschlossener Kupplung U_{M} = U_{G} ist, kann anhand dieser Signale auch ein schleifender Übergang beim Öffnen und Schließen der Kupplung geregelt werden. Ergibt sich nun, dass zum einen die Grenzgeschwindigkeit unterschritten ist, und dass zum anderen der erste Gang eingelegt ist, so ist der automatische Betriebsmodus zum Betätigen der Kupplung 8 grundsätzlich aktiviert. Er wird unmittelbar wieder deaktiviert, wenn sich einer der genannten Parameter ändert, wenn also beispielsweise die Grenzgeschwindigkeit überschritten wird, oder aber wenn der Fahrer in einen höheren Gang schaltet.

Bei aktiviertem Betriebsmodus steuert nun das Steuergerät 10 das Stellmittel 9 dann an, wenn die Motordrehzahl U_{M} eine bestimmte Grenzdrehzahl erreicht bzw. unterschreitet. Denn mit Erreichen dieser Grenzdrehzahl besteht die Gefahr, dass der Motor abgewürgt wird, wenn die Kupplung nicht geöffnet wird.

Das heißt, das Steuergerät 10 überwacht kontinuierlich die Motor-Ist-Drehzahl und steuert das Stellelement an, wenn dies erforderlich ist.

Bremst also der Fahrer beispielsweise bei einer Staufahrt, wenn er zuvor angefahren ist, so muss er das Kupplungspedal 5 nicht betätigen, vielmehr öffnet das Steuergerät 10 bzw. das Stellmittel 9 die Kupplung 8 automatisch, wenn infolge des Bremsvorgangs die Ist-Drehzahl des Motors kleiner als die Grenzdrehzahl ist. Im Falle des Anfahrens steuert das Steuergerät 10 das Stellmittel 9 zum Schließen der Kupplung an, wenn die Ist-Drehzahl des Motors infolge einer Betätigung des Gaspedals eine Grenzdrehzahl erreicht bzw. überschreitet (alternativ kann dies auch in Abhängigkeit der Momentananforderung z.B. des ACC-Systems oder der Fahrpedalstellung (Information wird über den Bus 12 gegeben, siehe Fig. 2) erfolgen). Diese beiden Grenzdrehzahlen können gleich sein. Steht also das Fahrzeug und gibt der Fahrer Gas, so wird die Kupplung 8 über das Stellmittel 9 sofort geschlossen, sobald die relevante Drehzahlerhöhung detektiert wurde, wobei die entsprechenden Informationen wie ausgeführt über den Fahrzeugbus 12 an das Motorsteuergerät 13 gegeben werden.

Fig. 2 zeigt ferner ein Anzeigemittel 14, z. B. eine optische LED-Anzeige oder eine Displayanzeige, an der der grundsätzliche Ein-Aus-Zustand des Systems bei Vorhandensein eines Wählmittels 11 angezeigt wird, wie auch in jedem Fall der Aktivierungszustand des Systems, ob also der Betriebsmodus aktiviert ist und der Fahrer das Kupplungspedal nicht betätigen muss, oder ob der Betriebsmodus deaktiviert ist, weil die entsprechenden oben beschriebenen Randbedingungen nicht erfüllt sind. Dies kann beispielsweise durch entsprechende optische bzw. farblich differenziert gestaltete Darstellungen visualisiert werden.

Eine zweckmäßige Verbindung des erfindungsgemäßen automatischen Kupplungsbetriebs liegt in einer Kopplung mit einem Fahrerassistenzsystem zur Längsführung, einem so genannten ACC-System. Mit einem solchen System wird das Fahrzeug automatisch bezogen auf ein vorausfahrendes Objekt längsgeführt, wozu über entsprechende Sensoren automatisch der Abstand gemessen wird. Über ein solches System ist es möglich, kontrolliert und automatisch gesteuert den Abstand zu einem vorausfahrenden Fahrzeug zu variieren, wobei mit solchen System sogar ein Bremsen des eigenen Kraftfahrzeugs bis in den Stand möglich ist. In Verbindung mit dem erfindungsgemäß vorgesehenen Betriebsmodus zum automatischen Öffnen der Kupplung ohne Fahrertätigkeit besteht nun die Möglichkeit, auch bei einem Fahrzeug mit einem manuell zu schaltenden Getriebe das ACC-System so auszulegen, dass es bis in den Stand bremst, nachdem mit aktiviertem Betriebsmodus zur automatischen Kupplungsbetätigung diese Kupplung mit Erreichen der Grenzdrehzahl auch automatisch geöffnet wird. Eine Fahreraktion ist auch hier nicht erforderlich.

## Patentansprüche

1. Kraftfahrzeug umfassend ein manuell zu schaltendes Getriebe mit einer über ein Kupplungspedal vom Fahrer zu betätigenden Kupplung,
**dadurch gekennzeichnet,**
**dass** ein in einem reversibel aktivierbaren Betriebsmodus betätigbares Stellmittel (9) zum automatischen Öffnen und Schließen der Kupplung (8) ohne Pedalbetätigung vorgesehen ist.

2. Kraftfahrzeug nach Anspruch 1,
**dadurch gekennzeichnet,**
**dass** der Betriebsmodus nur unterhalb einer Grenzgeschwindigkeit aktivierbar ist.

3. Kraftfahrzeug nach Anspruch 1 oder 2,
**dadurch gekennzeichnet,**
**dass** der Betriebsmodus nur im ersten Gang, gegebenenfalls auch im zweiten Gang und/oder dem Rückwärtsgang aktivierbar ist.

4. Kraftfahrzeug nach einem der vorangehenden Ansprüche,
**dadurch gekennzeichnet,**
**dass** das Stellelement (9) die Kupplung (8) in Abhängigkeit der MotorDrehzahl (UM), der Fahrpedalstellung oder der Momentenanforderung eines Fahrerassistenzsystems, und gegebenenfalls einer Information über den eingelegten Gang öffnet und schließt.

5. Kraftfahrzeug nach einem der vorangehenden Ansprüche,
**dadurch gekennzeichnet,**
**dass** ein Wählmittel (11) zum Anwählen und Ein- und Ausschalten des reversibel aktivierbaren Betriebsmodus vorgesehen ist.

6. Kraftfahrzeug nach Anspruch 5,
**dadurch gekennzeichnet,**
**dass** das Wählmittel (11) eine Taste oder ein Schalter ist, oder dass das Wählmittel eine ein Display umfassende optische Benutzerschnittstelle mit einer Anwahleinrichtung zum Wählen einer am Display dargestellten Information ist.

7. Kraftfahrzeug nach einem der vorangehenden Ansprüche,
**dadurch gekennzeichnet,**
**dass** ein Anzeigemittel (14) zum Anzeigen des Aktivierungszustands des Betriebsmodus vorgesehen ist.
